# EUROPEAN PATENT APPLICATION

(11) **EP 4 761 188 A1**
(43) Date of publication of application: **17.06.2026**
(21) Application number: 24219118.7
(22) Date of filing: 11.12.2024
(51) Int. Cl.: H04L 12/40, H04L 47/10

(54) **METHOD IMPLEMENTED BY AN ELECTRONIC CONTROL UNIT IN A VEHICLE CONTROLLER AREA NETWORK**

(71) Applicant: Valeo Comfort and Driving Assistance, 94000 Créteil (FR)
(72) Inventor: PITCHAIMANI, Ramakrishnan, 94000 Créteil (FR); RASOAMANANA, Aina, 94000 Créteil (FR)
(74) Representative: Delaval, Guillaume Laurent

(57) **Abstract**

The disclosure relates to a method implemented by an electronic control unit in a vehicle controller area network. The ECU has a CAN controller and a CAN transceiver that is connected to a CAN bus. The method comprises, by the CAN controller, transmitting outgoing messages and/or receiving from the CAN transceiver incoming messages that have been transmitted to the CAN transceiver through the CAN bus. Each message contains an indication of a respective level of priority among a predetermined set of levels of priority. The method comprises, by the CAN transceiver, inserting messages in at least one priority queue of a buffer, based on the indication of the respective level of priority contained in the messages and emptying the buffer at a dynamically controlled rate, following the at least one priority queue. This forms an improved solution for managing overloads of the CAN bus and/or the CAN controller.

## Description

### TECHNICAL FIELD

The disclosure relates to the field of computer programs and systems, and more specifically to a method implemented by an Electronic Control Unit (ECU) in a vehicle controller area network (CAN) for preventing or reducing frequency of CAN bus overloads and/or the ECU's CAN controller's overloads, and to a computer program, computer readable storage medium, and ECU therefore.

### BACKGROUND

In the context of automotive systems, and more specifically of vehicle functionality and communications, Electronic Control Units are specialized embedded systems in vehicles that manage various functions, such as engine control, transmission, braking, and infotainment. Modern vehicles can have anywhere from 30 to over 150 ECUs, each responsible for specific tasks and connected to each other in a network of ECUs, allowing for complex interactions and functionalities.

A Controller Area Network implements a robust communication protocol designed for real-time control applications, primarily in automotive environments. It enables ECUs to communicate with each other without a central computer, facilitating efficient data exchange and coordination among systems.

As vehicles become more complex with the integration of advanced features (such as autonomous driving), the number of ECUs and the amount of data transmitted over the CAN network increase significantly, potentially leading to an overload of the CAN bus. CAN bus overload refers to a situation where the communication capacity of the CAN is exceeded, leading to potential data loss or delays in message transmission, or even worse, unavailability of its services.

CAN bus overload raises concerns about bandwidth limitations and the ability of the CAN protocol to handle high data rates effectively and safely. Moreover, the CAN bus can be susceptible to various attacks, such as Denial of Service (DoS) attacks, that target the communication capabilities of the CAN bus system. During these attacks, a malicious actor floods the CAN bus with a high volume of messages. This overwhelming influx of messages can cause significant disruption to the normal operation of the network, and sometimes can lead to an unavailability of the service.

Within this context, there is still a need for an improved solution for preventing or reducing frequency of CAN bus overloads and/or the ECU's CAN controller's overloads.

### SUMMARY

It is therefore provided a method implemented by an electronic control unit in a vehicle controller area network, and referred to as "leaky bucket method". The ECU has a CAN controller and a CAN transceiver. The CAN transceiver is connected to a CAN bus. The method comprises, by the CAN controller, transmitting outgoing messages to the CAN transceiver for transmission into the CAN bus, and/or receiving from the CAN transceiver incoming messages that have been transmitted to the CAN transceiver through the CAN bus. Each message contains an indication of a respective level of priority among a predetermined set of levels of priority. The method further comprises, by the CAN transceiver, inserting messages in at least one priority queue of a buffer, based on the indication of the respective level of priority contained in the messages. The method furthermore comprises, by the CAN transceiver, emptying the buffer at a dynamically controlled rate, following the at least one priority queue.

The leaky bucket method may comprise one or more of the following features:
- the method comprises, by the CAN controller, transmitting outgoing messages to the CAN transceiver for transmission into the CAN bus, and the dynamically controlled rate is a decreasing function of a CAN bus utilization rate, and/or
- the method comprises, by the CAN controller, receiving from the CAN transceiver incoming messages having been transmitted to the CAN transceiver through the CAN bus, and the dynamically controlled rate is a decreasing function of a CPU overload of the CAN controller;
- the dynamically controlled rate is an increasing function of the respective level of priority;
- each priority queue comprises a respective bucket for each level of priority of the predetermined set of levels of priority, each respective message being inserted in the bucket respective to the respective level of priority contained in the respective message;
- the emptying of the buffer follows a first-in-first-out procedure for each bucket, and/or comprises consecutively and fully emptying each bucket from a highest level of priority to a lowest level of priority;
- the method further comprises, by the CAN transceiver: before the inserting of each message in the at least one priority queue of the buffer, checking if the buffer has enough capacity to accept messages; and upon the checking providing a negative result, detecting an overload condition of the buffer;
- the method further comprises, by the CAN transceiver, upon the checking provides a negative result, dropping one or more messages at least from the lowest level of priority;
- the method comprises, by the CAN controller, transmitting outgoing messages to the CAN transceiver for transmission into the CAN bus, and the dynamically controlled rate is a decreasing function of a CAN bus utilization rate, and the method further comprises, upon detecting an overload condition of the buffer, signaling one or more other ECUs of the CAN to each reduce a respective transmission rate;
- the method further comprises, by the CAN transceiver: before the inserting of each message in the at least one priority queue of the buffer, checking if the buffer has reached a predetermined filling threshold; and upon the checking providing a negative result, detecting a potentially upcoming overload condition of the buffer; and/or
- the method comprises, by the CAN controller, transmitting outgoing messages to the CAN transceiver for transmission into the CAN bus, and the dynamically controlled rate is a decreasing function of a CAN bus utilization rate, and the method further comprises, upon detecting a potentially upcoming overload condition of the buffer, signaling one or more other ECUs of the CAN to each reduce a respective transmission rate.

It is further provided a method implemented in (i.e., by) a vehicle controller area network having a plurality of ECUs, each ECU having a respective CAN controller and a respective CAN transceiver, the respective CAN transceiver being connected to a same CAN bus of the CAN, referred to as "controlling method". The controlling method comprises, by each ECU, implementing the leaky bucket method (e.g., repeatedly and continuously).

The controlling method may further comprise, by a computer system, monitoring a transmission rate of each of the plurality of ECUs; and detecting an anomaly in the transmission rate of at least one ECU.

The controlling method may optionally further comprise, identifying the at least one ECU as suspect or malicious, and/or isolating the at least one ECU from the CAN.

It is further provided a first computer program comprising instructions which, when the program is executed by an ECU, cause the ECU to carry out the leaky bucket method.

It is further provided an ECU comprising a processor coupled to a memory, the memory having recorded thereon the first computer program.

It is further provided a second computer program comprising instructions which, when the program is executed by a computer system, cause the computer system to carry out the monitoring, detecting, and optional identifying of the controlling method.

It is further provided a computer system comprising a processor coupled to a memory, the memory having recorded thereon the second computer program.

It is further provided a computer readable storage medium having recorded thereon any one of the computer programs.

### BRIEF DESCRIPTION OF THE DRAWINGS

Non-limiting examples will now be described in reference to the accompanying drawings, where:
- FIG. 1 shows a flowchart of an example of the leaky bucket method;
- FIG. 2 shows an example of CAN having a plurality of ECUs, each implementing the leaky bucket method; and
- FIG.s 3 to 4 illustrate an example of disclosed solution.

### DETAILED DESCRIPTION

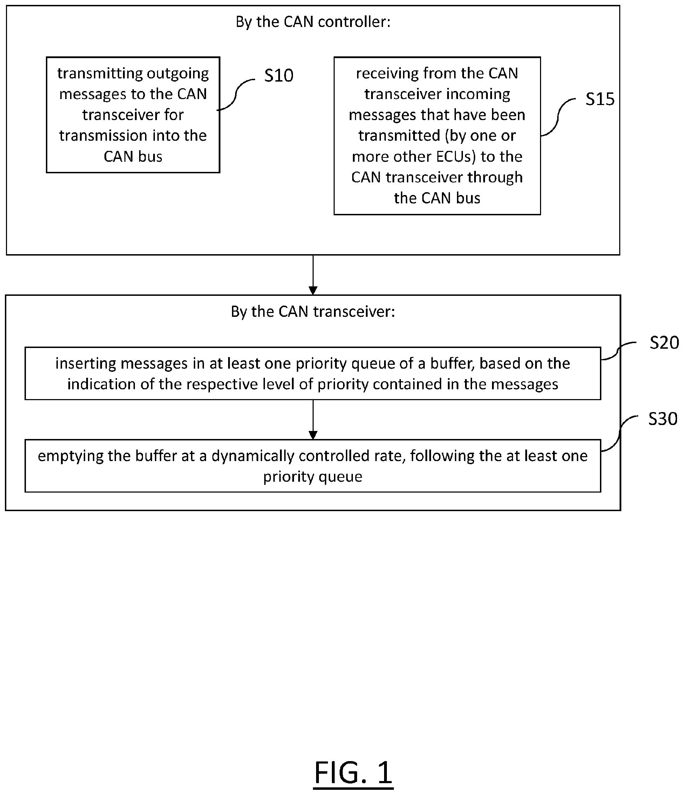

With reference to the flowchart of FIG. 1, it is proposed a leaky bucket method implemented by an electronic control unit in a vehicle controller area network. The CAN may be the CAN of any vehicle, for example a terrestrial vehicle, such as a car, a truck, or a motorcycle. The ECU has a CAN controller (e.g., the controller being run by a computer program or software stored in a memory of the ECU and executed by a processor or CPU of the ECU coupled to the memory). The ECU also has a CAN transceiver. The CAN transceiver is connected to a CAN bus.

The leaky bucket method comprises, by the CAN controller, transmitting S10 outgoing messages to the CAN transceiver for transmission into the CAN bus. Additionally or alternatively, the leaky bucket method comprises, by the CAN controller, receiving S15 from the CAN transceiver incoming messages that have been transmitted (by one or more other ECUs) to the CAN transceiver through the CAN bus.

Each (outgoing or incoming) message contains an indication of a respective level of priority among a predetermined set of levels of priority. The predetermined set of levels of priority may comprise any number of levels of priority, for example 3 or more than 3, for example a "highest" level of priority, a "lowest" level of priority lower than the highest level of priority, and an "intermediate" level of priority therebetween. The indication of a respective level of priority may consist of any data that allows assigning the respective level of priority to the message, such as a direct representation (a value or label) of the respective level of priority or an indirect representation (a type of data known to be associated with the respective level of priority).

The leaky bucket method further comprises, by the CAN transceiver, inserting S20 (outgoing and/or incoming) messages in at least one priority queue of a buffer, based on the indication of the respective level of priority contained in the messages. The at least one priority queue may consist of a single priority queue, or alternatively may comprise several distinct priority queues. In the latter case, each respective priority queue may achieve a separate buffering.

In examples where the CAN controller both transmits outgoing messages and receives incoming messages, the at least one priority queue may comprise or consist of a single priority queue which is the same for (i.e., shared by) both incoming and outgoing messages.

Alternatively, the at least one priority queue may comprise several different priority queues for outgoing and for incoming messages, for example the at least one priority queue may comprise or consist of exactly two priority queues, including a first priority queue for outgoing messages and a second priority queue for incoming messages (the second priority queue being distinct from the first priority queue). The inserting S20 of the messages may comprise inserting outgoing messages in the first priority queue of the buffer, and inserting incoming messages in the second priority queue of the buffer, based on the indication of the respective level of priority contained in the outgoing and incoming messages.

The leaky bucket method furthermore comprises, by the CAN transceiver, emptying S30 the buffer at a dynamically controlled rate, following the at least one priority queue.

The leaky bucket method thereby implements a leaky bucket mechanism.

In examples where the CAN controller both transmits outgoing messages and receives incoming messages, and the at least one priority queue comprises or consists of a single priority queue which is the same for (i.e., shared by) both incoming and outgoing messages, the emptying S30 of the buffer may alternate between outgoing messages and incoming messages, with or without a priority between the two types of messages. The emptying S30 of the buffer may be performed at one single dynamically controlled rate. The emptying S30 of the buffer may further comprise transmitting outgoing messages (from the CAN transceiver) into the CAN bus and transmitting incoming messages (from the CAN transceiver) to the CAN controller.

Alternatively, when the at least one priority queue comprises several different priority queues for outgoing and for incoming messages (e.g., a first priority queue for outgoing messages and a second priority queue for incoming messages), the emptying S30 of the buffer may comprise transmitting outgoing messages into the CAN bus at a first dynamically controlled rate and transmitting incoming messages to the CAN controller at a second dynamically controlled rate. Optionally, the first dynamically controlled rate may or may not be equal to the second dynamically controlled rate. The emptying of (the first priority queue of) the buffer for outgoing messages at the first dynamically controlled rate may occur separately from the emptying of (the second priority queue of) the buffer for incoming messages at the second dynamically controlled rate.

Such a method amounts to an improved solution for preventing or reducing frequency of CAN bus overloads and/or the ECU's CAN controller's overloads.

Notably, the leaky bucket method amounts to an efficient approach to mitigate CAN bus overloads and/or the ECU's CAN controller's overloads by implementing, by the CAN transceiver, a leaky bucket mechanism to limit the messages sent to and/or received from the CAN bus. Indeed, the leaky bucket method features a traffic-shaping approach because the method controls the rate at which messages are sent to and/or received from the CAN bus. Moreover, the implementation of the leaky bucket mechanism by the CAN transceiver protects the CAN bus from a potentially compromised host controller (e.g., the host or host controller may be the microcontroller having the CAN controller), since the transceiver is not much subjected to attacks like the host/CAN controller. Furthermore, the implementation of the leaky bucket mechanism -that controls the flow of messages- in combination with at least one priority queue ensures that critical messages (i.e., messages with high priority) are transmitted and/or received generally before lower-priority messages. Such a combination helps avoiding CAN bus congestion and ensures timely delivery of critical (e.g., high-priority and important) messages. The leaky bucket method, therefore, features a priority-based management of (the at least one priority queue of) the buffer.

The leaky bucket method is implemented by an ECU in a vehicle CAN. The CAN is a network that allows a plurality of ECUs to communicate with each other. In particular, the vehicle CAN allows the vehicle to share (e.g., critical) data with other vehicles, pieces of infrastructure and other entities in the surrounding of the vehicle.

Messages are data transmitted to and/or received from the CAN bus by one or more other ECUs of a network of ECUs. Each message may be identified by an ID (e.g., an unique identifier). In an example of implementation, the unique identifier may contain an indication of the respective level of priority. For example, the lower numerical values of the ID may indicate higher levels of priority. The respective level of priority is a level of priority among a predetermined set of levels of priority. For example, the predetermined set of levels of priority may comprise three levels of priority, e.g., high level, intermediate level, low level. The predetermined set of levels of priority may be used to classify (e.g., to sort) each message according to the respective level of priority (e.g., be it indicated by the unique identifier and/or be it indicated by a level of priority among a predetermined set of levels of priority).

When the leaky bucket method comprises, by the CAN controller, transmitting outgoing messages to the CAN transceiver for transmission into the CAN bus, the (e.g., first) dynamically controlled rate may be a decreasing function of a CAN bus utilization rate (at least for the outgoing messages). Thus, in examples, the CAN bus utilization rate may change during time. In one case, if the CAN bus utilization rate increases, the (e.g., first) dynamically controlled rate may decrease. In other words, if the value of the CAN bus utilization rate changes from a first value to a second value, the second value being higher than the first value, the value of the (e.g., first) dynamically controlled rate changes from a respective first value to a respective second value, the respective second value being lower of the respective first value. In another case, if the CAN bus utilization rate decreases, the (e.g., first) dynamically controlled rate may increase. In other words, if the value of the CAN bus utilization rate changes from a first value to a second value, the second value being lower than the first value, the value of the (e.g., first) dynamically controlled rate changes from a respective first value to a respective second value, the respective second value being higher of the respective first value.

When the leaky bucket method comprises, by the CAN controller, receiving from the CAN transceiver incoming messages having been transmitted to the CAN transceiver through the CAN bus, the (e.g., second) dynamically controlled rate may be a decreasing function of a CPU overload of the CAN controller (at least for the incoming messages). Thus, in examples, the CPU overload may change during time. In one case, if the CPU overload increases, the (e.g., second) dynamically controlled rate may decrease. In other words, if the value of the CPU overload changes from a first value to a second value, the second value being higher than the first value, the value of the (e.g., second) dynamically controlled rate changes from a respective first value to a respective second value, the respective second value being lower of the respective first value. In other case, if the CPU overload decreases, the (e.g., second) dynamically controlled rate may increase. In other words, if the value of the CPU overload changes from a first value to a second value, the second value being lower than the first value, the value of the (e.g., second) dynamically controlled rate changes from a respective first value to a respective second value, the respective second value being higher of the respective first value.

The CPU overload may be managed by a dedicated software at the CPU of the ECU, i.e., controlled by the microcontroller of the ECU.

In examples, the (first and/or second) dynamically controlled rate may be an increasing function of the respective level of priority. That is, the higher the level of priority is, the faster the dynamically controlled rate is for emptying the buffer (i.e., for emptying the one or more buckets in the at least one priority queue of the buffer). Such a feature reinforces the prioritization of messages, from high-priority to low-priority messages. Indeed, this feature further prevents the CAN bus from being overload by ensuring that only a limited number of messages are sent/received.

In examples, at least one (e.g., each) priority queue may comprise a respective bucket for each level of priority of the predetermined set of levels of priority. In other words, the at least one (e.g., each) priority queue of the buffer may be partitioned into one or more buckets, each bucket corresponding to a level of priority of the predetermined set of levels of priority. As each message contains an indication of a respective level of priority among a predetermined set of levels of priority, each respective message may be inserted in the bucket corresponding to the respective level of priority contained in the said respective message. Otherwise said, each message may be inserted in a respective bucket (of the at least one (e.g., each) priority queue of the buffer) according to the respective level of priority. Thus, the at least one priority queue may be partitioned according to the predetermined set of levels of priority, and messages sharing the same indication of level of priority may be inserted in the bucket corresponding to the respective levels of priority.

The emptying S30 of the buffer, in case the at least one priority queue is partitioned in one or more buckets (e.g., the at least one priority queue may comprise a respective bucket for each level of priority of the predetermined set of levels of priority), may follow a first-in-first-out procedure for each bucket, i.e., the messages in each bucket may be transmitted (e.g., each outgoing message (if any) may be transmitted into the CAN bus and/or each incoming message (if any) may be transmitted to the CAN controller) following the order under which they have been inserted in each bucket.

The emptying S30 of the buffer, in case the at least one priority queue is partitioned in one or more buckets, may comprise consecutively and fully emptying each bucket from a highest level of priority to a lowest level of priority. Thus, high-priority messages may be transmitted first, whereas low-priority messages may wait their turn in the at least one priority queue according to the respective level of priority of each bucket.

The leaky bucket method may further comprise, by the CAN transceiver, before the inserting S20 of messages (e.g., each message, both outgoing and incoming messages) in the at least one priority queue of the buffer, checking if the buffer has enough capacity to accept messages.

The checking, therefore, may compute the total size of (outgoing and/or incoming) messages already inserted in the buffer and evaluate if inserting another message may exceed the total capacity of the buffer (or the total capacity of the respective bucket corresponding to one of the predetermined set of levels of priority).

The checking may provide a positive result: in this case, the message may be inserted in the at least one priority queue of the buffer, based on the indication of the respective level of priority contained in the message.

If, instead, the checking provides a negative result, i.e., the inserting of the message would exceed the capacity of the buffer, the leaky bucket method may comprise, by the CAN transceiver, detecting an overload condition of the buffer.

The leaky bucket method may comprise, by the CAN transceiver, upon the checking provides a negative result, delaying the insertion of one or more messages in the at least one priority queue of the buffer. The delaying may follow the indication of the respective priority queue, i.e., the method may delay the one or more messages at least from the lowest priority queue. The delaying of the insertion of one or more messages may avoid the detection of the overload condition of the buffer.

The leaky bucket method may comprise, by the CAN transceiver, upon the checking provides a negative result, dropping one or more messages at least from the lowest priority queue. The dropping of the one or more messages may comprise discarding (e.g., erasing from the buffer) the one or more messages from the at least one bucket respective to the lowest priority queue (and thus not passing such dropped outgoing - or respectively - incoming messages to the CAN bus - or respectively - to the CAN controller). The dropping of the one or more messages may ensure that messages with a higher level of priority (i.e., important or critical) are still transmitted and/or received.

When the leaky bucket method comprises, by the CAN controller, transmitting outgoing messages to the CAN transceiver for transmission into the CAN bus, the (e.g., first) dynamically controlled rate may be a decreasing function of a CAN bus utilization rate (at least for the outgoing messages), the method may further comprise, upon detecting an overload condition of the buffer of at least one of the ECUs connected to the CAN, signaling one or more other ECUs of the CAN to each reduce a respective transmission rate.

The reducing of the respective transmission rate of the one or more other ECUs of the CAN may comprise reducing the dynamically controlled rate. The reduction of the respective transmission rate of the one or more other ECUs amounts to a backpressure mechanism to prevent overloads and the CAN bus congestion. The reducing may additionally comprise lowering the levels of priority of the buffer in the respective CAN transceiver of the at least one ECU that detected the overload condition. In particular, the lowering of the levels of priority of the buffer may comprise lowering the levels of priority of some or all buckets in the buffer of the ECU that detected the (potential) overload condition, in order to prevent or mitigate a CAN bus congestion.

The signaling may comprise sending an alert for notifying the one or more other ECUs of the CAN (e.g., the one or more microcontrollers of the one or more other ECUs). The alert may notify that the buffer of the at least one ECU connected to the CAN is totally full (i.e., 100% of the capacity of the buffer has been reached). Optionally, the alert may notify additional information about the at least one ECU that detected the overload condition (e.g., a respective identifier in the network of ECUs) and/or the status of the ECU that detected the overload condition (e.g., suspicious DoS attack, resources utilization, and other anomalies regarding the components of the ECU).

The leaky bucket method may further comprise, by the CAN transceiver, before the inserting S20 of messages (e.g., each message, both outgoing and incoming messages) in the at least one priority queue of the buffer, checking if the buffer has reached a predetermined filling threshold. The predetermined filling threshold may be strictly inferior to the total capacity of the buffer. In examples, the predetermined filling threshold may be, e.g., a value corresponding to 80% or 90% or 95% of the total (i.e., full) capacity of the buffer.

Upon the checking providing a negative result, i.e., the inserting of the message would exceed the predetermined filling threshold of the buffer, the leaky bucket method may comprise, by the CAN transceiver, detecting a potentially upcoming overload condition of the buffer. The detecting of a potentially upcoming overload condition of the buffer of at least one ECU in the CAN network may mitigate the occurrence of an overload condition and, consequently, of a CAN bus congestion.

When the leaky bucket method comprises, by the CAN controller, transmitting outgoing messages to the CAN transceiver for transmission into the CAN bus, the (e.g., first) dynamically controlled rate may be a decreasing function of a CAN bus utilization rate (at least for the outgoing messages), the leaky bucket method may further comprise, upon detecting a potentially upcoming overload condition of the buffer of at least one of the ECUs connected to the CAN, signaling one or more other ECUs of the CAN to each reduce a respective transmission rate.

The reducing of the respective transmission rate of the one or more other ECUs of the CAN may comprise reducing the dynamically controlled rate.

The signaling may comprise sending an alert for notifying the one or more other ECUs of the CAN that the buffer of the at least one ECU connected to the CAN is nearly full (i.e., 80% or 90% or 95% of the total capacity of the buffer has been reached). Optionally, the alert may notify additional information about the at least one ECU that detected the potentially upcoming overload condition (e.g., a respective identifier in the network of ECUs) and/or the status of the ECU that detected the potentially upcoming overload condition (e.g., suspicious DoS attack, resources utilization, and other anomalies regarding the components of the ECU).

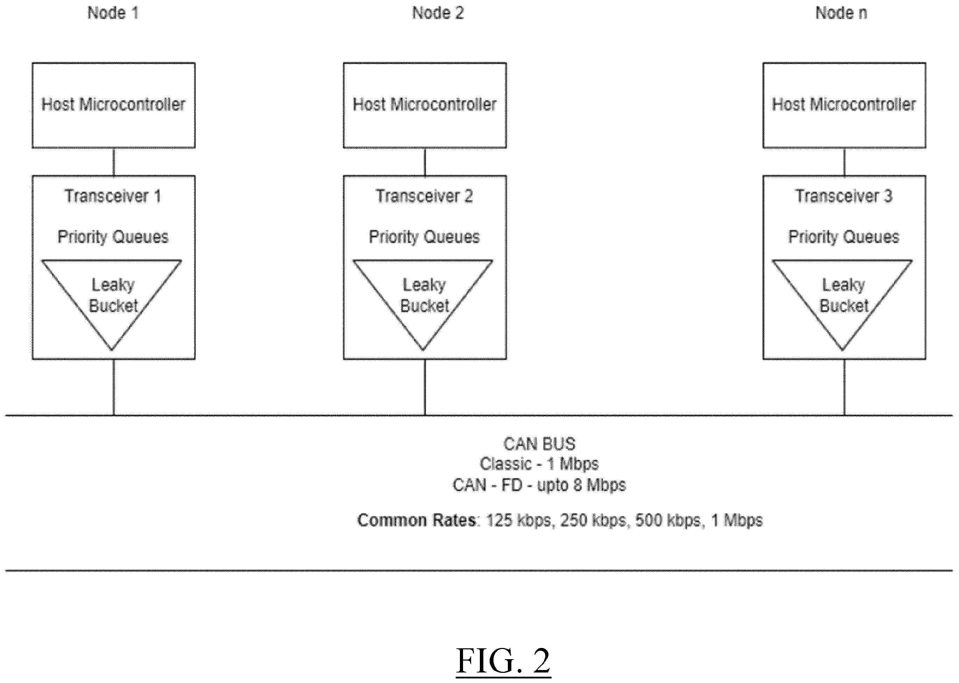

With reference to FIG. 2, it is further provided a method, and referred to as "controlling method". The controlling method is implemented in/by a vehicle controller area network having a plurality of ECUs, each ECU having a respective CAN controller and a respective CAN transceiver, the respective CAN transceiver being connected to a same CAN bus of the CAN. Each ECU (Node 1, Node 2, ..., Node n) implements the leaky bucket method. By continuously repeating S10-S30, the ECUs altogether control load of the CAN.

Such a controlling method is an improved solution for monitoring (e.g., controlling) a network of ECUs, where each ECU is connected to a same CAN bus and each ECU implements the leaky bucket method, to prevent (or mitigate the occurrence of) a CAN bus congestion.

The controlling method may optionally further involve a computer system. The computer may be coupled or connected to the CAN, for example as a central security master that may collect data on the number and/or on the types of messages sent/received from each ECU of the CAN. The central security master may control the flow of data through the CAN bus (e.g., monitoring the CAN bus utilization in a given time interval, e.g., every 5 seconds or every 10 seconds), identify and/or detect at least one ECU that may behave maliciously, and implement an action to prevent or reduce the occurrences of a CAN bus congestion.

The controlling method may comprise, by the computer system (e.g., a central security master), monitoring a transmission rate of each of the plurality of ECUs connected through the same CAN bus. The monitoring may also comprise analyzing (e.g., continuously or periodically) the transmission rate of each ECUs of the CAN. The monitoring may further comprise identifying (e.g., through pattern recognition algorithms) unusual transmission rates of one or more ECUs.

The controlling method may comprise, by the computer system, detecting an anomaly in the transmission rate of at least one ECU. An anomaly may be, in examples, a DoS attack, a malicious behavior, a suspicious behavior or a security error state. The detecting may comprise setting thresholds to detect anomalies. For example, if an ECUs of the CAN exceeds a threshold corresponding to the respective transmission rate and/or an ECUs of the CAN violates (e.g., continuously or periodically) a leaky bucket policy, the monitoring may comprise detecting an anomaly.

The controlling method may optionally, by the computer system, comprise identifying the at least one ECU as suspect or malicious, and/or isolating the at least one ECU from the CAN. The identifying of the at least one ECU as suspect or malicious may comprise logging the at least one ECU as suspect or malicious and/or generating an alert notification to the one or more other ECUs of the CAN network. The alert notification may comprise details about the ECU identified as suspect or malicious and/or the type of anomaly detected, e.g., a DoS attack. The isolating the at least one ECU from the CAN may comprise disabling the at least one ECU.

The leaky bucket method is implemented on an ECU. This means that steps (or substantially all the steps) of the method are executed by at least one computing unit, or any system alike. A typical example of implementation of a method is to perform the method with an ECU adapted for this purpose. The ECU may comprise a microcontroller having a processor coupled to a memory, the memory having recorded thereon a computer program comprising instructions for performing the method. The memory may also store a database. The memory is any hardware adapted for such storage, possibly comprising several physical distinct parts (e.g. one for the program, and possibly one for the database).

An example of implementation of the leaky bucket method is now discussed.

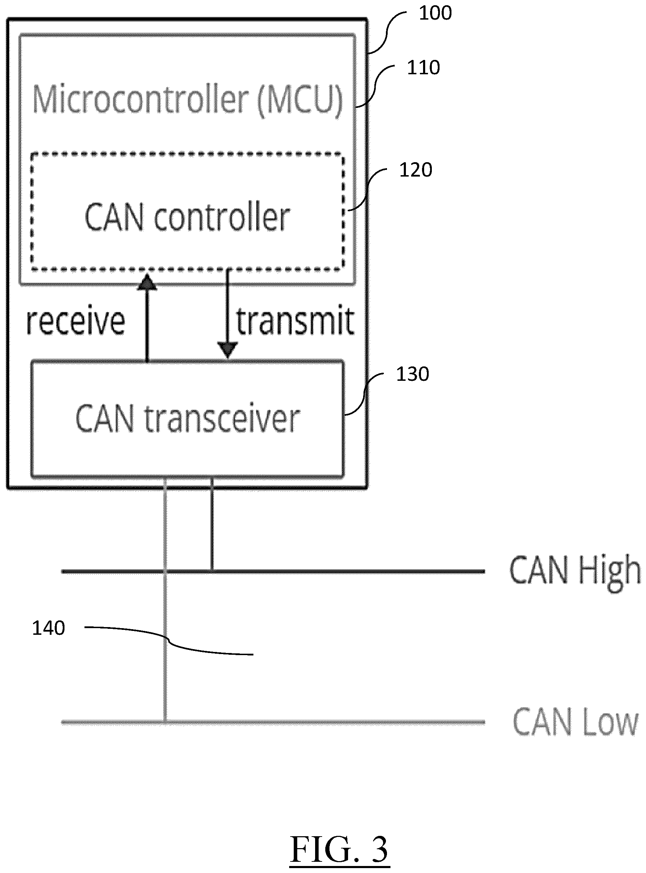

FIG. 3 shows an example of the ECU of the leaky bucket method, being noted that any other ECU of the CAN may be structured identically.

The ECU 100 may have a microcontroller 110 (MCU) which may include a CAN controller 120. The CAN controller 120 may be integrated in the MCU 110 and ensure that all communication adheres to a CAN protocol (the CAN protocol may comprise message encoding, error detection, arbitration of the messages etc.), thus removing complexity and saving resources of the MCU.

The ECU 100 may also have a CAN transceiver 130. The CAN transceiver 130 connects the CAN controller 120 to the physical CAN bus wires 140, converting controller data into differential signals for the CAN bus and vice versa. The CAN transceiver also provides electrical protection.

The ECU may be connected to a two-wire bus comprising a twisted pair: CAN high and CAN low. The CAN bus may be a Classical CAN bus and support up to 1 Mbps, or a CAN-FD (Flexible Data-Rate) bus and support 8 Mbps or a CAN-XL bus (eXtra Large) support up to 20 Mbps. These types of CAN buses are useful in automotive and industrial applications, where multiple electronic control units need to communicate and coordinate their activities within a network.

Each message transmitted to and/or received from the CAN bus may comprise: an arbitration (Header) containing the message identifier (ID), control fields, and the length of the data contained in the message; a data field containing the actual payload of the message; a cyclic redundancy check (CRC) for error checking; and an acknowledge (ACK) for acknowledging a reception of the message. The message identifier may provide an indication of a respective level of priority among a predetermined set of levels of priority. For example, the numerical value of the message identifier may indicate of the level of priority contained in the message. A small value of the message identifier may indicate that the message is a high priority message.

In case the CAN bus is a classical CAN bus, the message length may be between 44 and 74 bits. For a CAN-FD, the message length may be larger, up to 1000 bytes (i.e., 8000 bits) in size. For a CAN bus with a rate (also known as Baud rate) of 1Mbps, a transmission time for a 64-byte amounts to (64x8 bits)/1Mbps, i.e., 512 microseconds. If the CAN bus sends 100 messages in one second, and each message takes roughly 500 microseconds to be transmitted, the total transmission time for all messages amounts to 0.05 seconds. The CAN bus utilization, if the given period of time is one second, amounts to 5% of the total bandwidth of the CAN bus.

CAN bus overload is a situation where the CAN bus utilization reaches 100% or nearly 100% of its bandwidth capacity and, therefore, can no more reliably transport any messages within the expected timeframe. Indeed, when the CAN bus is continuously operating at or near 100% of its total bandwidth, message collisions, delays and data loss may happen.

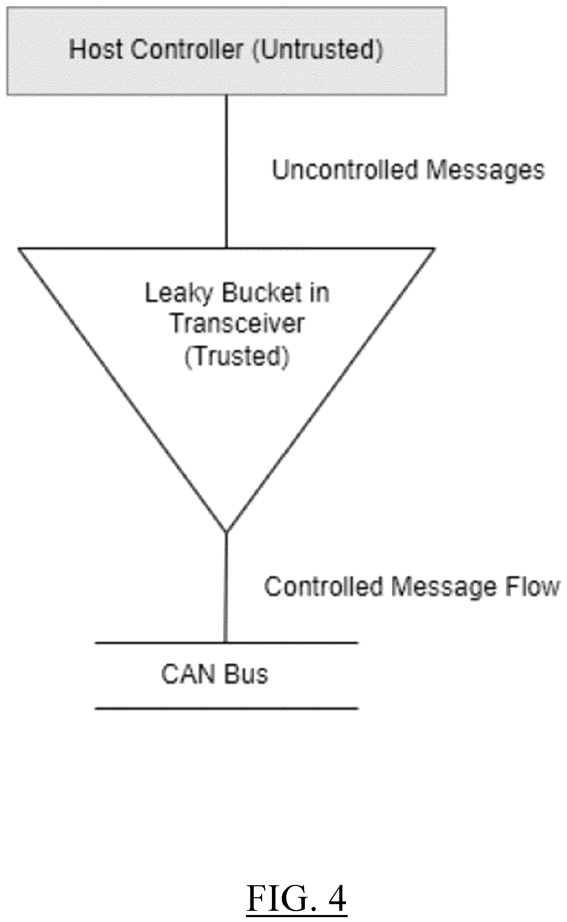

FIG. 4 shows a schematic representation of an ECU which implements the leaky bucket method. Such a method adopts the principle of a leaky bucket along with a priority queue in the CAN transceiver to detect and manage CAN bus overload and/or CAN controller overload situations. Implementing the leaky bucket at the CAN transceiver enables the protection of the CAN bus from a compromised host controller, since the CAN transceivers do not receive many attacks in comparison to the host controller. Moreover, the leaky bucket may control the flow (i.e., the rate) of messages, while the priority queue may ensure that high-priority messages are transmitted and/or received before lower-priority messages. This combination helps avoiding CAN bus congestion and ensures timely delivery of high-priority messages.

The principle of a leaky bucket may be implemented using a traffic-shaping algorithm to control the flow of data. If one or more buckets (e.g., a partition of the at least one priority queue of the buffer and/or the whole buffer) fills too quickly in a given time interval, the one or more bucket may overflow, i.e., the total size of (outgoing and/or incoming) messages exceeds the respective capacity corresponding to one of the predetermined set of levels of priority. Consequently, the leaky bucket method may comprise, by the CAN transceiver, detecting an overload condition of the buffer. The detection of an overload condition of the buffer may indicate the occurrence of a CAN bus congestion and/or a CAN controller overload.

The leaky bucket, therefore, may control how many messages are allowed to enter the CAN bus at any given time and/or in a given period of time; in other words, it may be regarded as a flow controller because it ensures that messages flow at a regulated rate. When the regulated rate is such that the capacity of the bucket may be exceeded in a given interval of time, an indication of messages congestion may occur, the indication of the messages congestion may signal that the CAN bus and/or the CAN controller may be overloaded or nearly overloaded.

The at least one priority queue is a data structure that may process messages based on the indication of the respective priority level. High-priority messages may be transmitted first, while lower-priority messages may be buffered while waiting to be transmitted according to the respective level of priority. Each message may contain an indication of a respective level of priority. The respective level of priority may be determined by the arbitration ID contained in the message. For example, lower ID numbers may correspond to higher priority messages. Therefore, the priority queue may be regarded as a message scheduler because it may sort messages based on the indication of the respective level of priority and/or other criteria (e.g., critical safety messages first).

The leaky bucket method may be implemented by a leaky bucket algorithm. An example of implementation of a leaky bucket algorithm combined with a priority queue at the CAN transceiver is now presented.

A first step of the algorithm may comprise initializing the one or more buckets and/or the buffer. The initializing may also comprise defining the size of each of the one or more buckets and/or the size of the buffer. The initializing may further comprise setting the dynamically controlled rate (e.g., the first and/or the second dynamically controlled rates when the at least one priority queue for outgoing and incoming messages are different). The (first) dynamically controlled rate (for outgoing messages) may depend from the CAN bus utilization and the transmission rate, which controls how quickly messages are released from the buffer to the CAN bus. The (second) dynamically controlled rate (for incoming messages) may depend from the CPU overload of the CAN controller and the transmission rate, which controls how quickly messages are released from the buffer to the CAN controller.

A second step of the algorithm may comprise initializing the at least one priority queue. The initializing of the at least one priority queue may also comprise creating one or more buckets for each level of priority of the predetermined set of levels of priority (e.g., high, intermediate, low). Messages may, therefore, be inserted in the corresponding one or more buckets according to their respective levels of priority among the predetermined set of levels of priority.

A third step of the algorithm may further comprise, before the inserting of messages, checking if the bucket (wherein the message is supposed to be inserted according to the respective level of priority) has enough space to accept it. If this is the case, the third step comprises inserting the message in the at least one priority queue of a buffer, based on the indication of the respective level of priority contained in the message; else, the third step may comprise, detecting an overload condition of the buffer and/or delaying the inserting of messages in the at least one priority queue of the buffer at least from the lowest priority queue and/or dropping (e.g., discarding and/or erasing) one or more messages from the lowest level of priority. The delaying of the inserting of messages in the at least one priority queue of the buffer may also comprise delaying the inserting of messages at least from a lowest level of priority, to ensure that most important (i.e., high-priority or critical) messages are still transmitted and/or received. The detecting an overload condition of the buffer may comprise, by the CAN transceiver, signaling one or more other ECUs of the CAN to each reduce a respective transmission rate.

A fourth step of the algorithm may comprise emptying (and then transmitting) the at least one priority queue (e.g., one bucket per time, from the highest priority level to the lowest priority level) at a rate determined by the dynamically controlled rate. Thus, high-priority messages may be transmitted first, whereas low-priority messages may wait their turn in the respective bucket according to the respective level of priority of each bucket.

According to the specific implementation, the leaky bucket method may comprise several reactions (e.g., a backpressure mechanism) to the detection of a CAN bus overload.

If at least one ECU reaches an overload condition, the leaky bucket method may comprise signaling one or more other ECUs of the CAN to each reduce a transmission rate through the CAN bus. The reduction (e.g., the slow-down) of the transmission rate of the at least one ECU may depend on the CAN bus utilization (for outgoing messages) or the CPU overload of the CAN controller (for incoming messages) and/or the level of priority of the one or more buckets. The reduction (e.g., the slow-down) of the transmission rate may be notified to some or all ECUs of the networkto prevent the CAN bus overload. If the leaky bucket method keeps signaling (continuously and/or repeatedly with a certain pattern) the same at least one ECU, the leaky bucket method may comprise shutting down and/or isolating the same at least one ECU from the network of ECUs.

Referring back to FIG. 3, the ECU 100 comprises a microcontroller 110 comprising a central processing unit (CPU) connected to an internal communication, a random access memory (RAM) also connected to the BUS 140. The ECU may also comprise a mass storage device controller manages accesses to a mass memory device, such as hard drive. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter manages accesses to the CAN.

A computer program herein may comprise instructions executable by an ECU or a computer system, the instructions comprising means for causing the executing system to perform the corresponding method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A method implemented by an electronic control unit (ECU) in a vehicle controller area network (CAN), the ECU having a CAN controller and a CAN transceiver, the CAN transceiver being connected to a CAN bus, the method comprising:
• by the CAN controller, transmitting (S10) outgoing messages to the CAN transceiver for transmission into the CAN bus and/or receiving (S15) from the CAN transceiver incoming messages having been transmitted to the CAN transceiver through the CAN bus, each message containing an indication of a respective level of priority among a predetermined set of levels of priority; and
• by the CAN transceiver:
∘ inserting (S20) messages in at least one priority queue of a buffer, based on the indication of the respective level of priority contained in the messages; and
∘ emptying (S30) the buffer at a dynamically controlled rate, following the at least one priority queue.

2. The method of claim 1, wherein:
• the method comprises, by the CAN controller, transmitting outgoing messages to the CAN transceiver for transmission into the CAN bus, and the dynamically controlled rate is a decreasing function of a CAN bus utilization rate, and/or
• the method comprises, by the CAN controller, receiving from the CAN transceiver incoming messages having been transmitted to the CAN transceiver through the CAN bus, and the dynamically controlled rate is a decreasing function of a CPU overload of the CAN controller.

3. The method of claim 1 or 2, wherein the dynamically controlled rate is an increasing function of the respective level of priority.

4. The method of any one of claims 1 to 3, wherein each priority queue comprises a respective bucket for each level of priority of the predetermined set of levels of priority, each respective message being inserted in the bucket respective to the respective level of priority contained in the respective message.

5. The method of claim 4, wherein the emptying of the buffer follows a first-in-first-out procedure for each bucket, and/or comprises consecutively and fully emptying each bucket from a highest level of priority to a lowest level of priority.

6. The method of any one of claims 1 to 5, further comprising, by the CAN transceiver:
• before the inserting of each message in the at least one priority queue of the buffer, checking if the buffer has enough capacity to accept messages; and
• upon the checking providing a negative result, detecting an overload condition of the buffer.

7. The method of claim 6, further comprising, by the CAN transceiver, upon the checking provides a negative result, dropping one or more messages at least from the lowest level of priority.

8. The method of claim 6 or 7, wherein:
• the method comprises, by the CAN controller, transmitting outgoing messages to the CAN transceiver for transmission into the CAN bus, and the dynamically controlled rate is a decreasing function of a CAN bus utilization rate, and
• the method further comprises, upon detecting an overload condition of the buffer, signaling one or more other ECUs of the CAN to each reduce a respective transmission rate.

9. The method of any one of claims 1 to 8, further comprising, by the CAN transceiver:
• before the inserting of each message in the at least one priority queue of the buffer, checking if the buffer has reached a predetermined filling threshold; and
• upon the checking providing a negative result, detecting a potentially upcoming overload condition of the buffer.

10. The method of claim 9, wherein:
• the method comprises, by the CAN controller, transmitting outgoing messages to the CAN transceiver for transmission into the CAN bus, and the dynamically controlled rate is a decreasing function of a CAN bus utilization rate, and
• the method further comprises, upon detecting a potentially upcoming overload condition of the buffer, signaling one or more other ECUs of the CAN to each reduce a respective transmission rate.

11. A method comprising:
in a vehicle controller area network (CAN) having a plurality of ECUs, each ECU having a respective CAN controller and a respective CAN transceiver, the respective CAN transceiver being connected to a same CAN bus of the CAN,
by each ECU:
implementing a method according to any one of claims 1 to 10.

12. The method of claim 11, wherein the method further comprises, by a computer system:
• monitoring a transmission rate of each of the plurality of ECUs;
• detecting an anomaly in the transmission rate of at least one ECU;
• optionally, identifying the at least one ECU as suspect or malicious, and/or isolating the at least one ECU from the CAN.

13. A computer program comprising instructions which, when the program is executed by an ECU, cause the ECU to carry out the method of any one of claims 1 to 10, or which, when the program is executed by a computer system, cause the computer system to carry out the monitoring, detecting, and optional identifying of the method of claim 12.

14. A computer readable storage medium having recorded thereon the computer program of claim 13.

15. An ECU (100) comprising a processor coupled to a memory, the memory having recorded thereon the computer program of claim 13.
